# FASCICULE DE BREVET EUROPEEN

(11) **EP 4 010 639 B1**
(45) Date de publication et mention de la délivrance du brevet: **25.10.2023**
(21) Numéro de dépôt: 20765202.5
(22) Date de dépôt: 06.08.2020
(51) Int. Cl.: F24H 3/00, F24H 9/00, F24H 3/04

(54) **ENSEMBLE DE GÉNÉRATION DE CHALEUR ET PROCÉDÉ DE PILOTAGE DUDIT ENSEMBLE**
WÄRMEERZEUGENDE ANORDNUNG UND VERFAHREN ZUR STEUERUNG DER ANORDNUNG
HEAT-GENERATING ASSEMBLY AND METHOD FOR CONTROLLING THE ASSEMBLY

(30) Priorité: 08.08.2019 FR 1909069
(43) Date de publication de la demande: 15.06.2022
(73) Titulaire: Eco-Tech Ceram, 66100 Perpignan (FR)
(72) Inventeur: MEFFRE, Antoine, 66000 Perpignan (FR); DEJAN, Guilhem, 66000 Perpignan (FR); BRUYÈRE, Davy, 17800 Montils (FR)
(74) Mandataire: Fache, Sébastien
(86) Numéro de dépôt international: PCT/EP2020/072169
(87) Numéro de publication internationale: WO 2021/023831

(56) Documents cités:
- WO-A1-2007/139328
- DE-C- 952 380
- KR-Y1- 200 414 996
- US-A- 931 565

## Description

### DOMAINE TECHNIQUE

L'invention s'inscrit dans le domaine de la génération d'énergie calorifique, et porte plus particulièrement sur un ensemble de génération de chaleur et un procédé de contrôle dudit ensemble.

### ART ANTERIEUR ET INCONVENIENTS DE L'ART ANTERIEUR

Les réseaux de distribution d'énergie, et notamment d'électricité, doivent répondre à des demandes croissantes. En outre, les énergies renouvelables, qui ont la particularité d'offrir une production d'énergie discontinue, occupent une place de plus en plus importante dans l'offre énergétique. Il en résulte des pics et des creux de production, générant des instabilités d'offres et de demandes d'énergie.

Pour pallier ces inconvénients, des solutions techniques de stockage d'énergie ont été développées ces dernières années, en particulier sous forme d'énergie calorifique. Les plus efficaces doivent emmagasiner des quantités très importantes d'énergie pour assurer une restitution d'énergie prolongée dans le temps. Il est donc nécessaire de prévoir des générateurs d'énergie calorifique puissants, capables de générer de grandes quantités de chaleur en peu de temps.

Il est par exemple connu de la publication US20120240916 des ensembles de génération de chaleur comprenant au moins un dispositif de génération de flux d'air, des moyens d'amenée d'air fluidiquement reliés au dispositif de génération de flux d'air, et deux dispositifs de chauffage, ou canons à air, comprenant chacun une entrée d'air reliée en sortie des moyens d'amenée d'air et une sortie d'air réchauffé. De tels assemblages sont en effet en mesure de cumuler beaucoup de puissance, de l'ordre de plusieurs centaines de kilowatts. WO2007/139328A1 montre un ensemble de génération de chaleur selon le préambule de la revendication 1.

Cependant, afin d'assurer une distribution homogène du flux d'air, les moyens d'amenée d'air présentent une géométrie complexe qui occasionne des pertes de charges importantes.

D'autre part, à cause de ces fortes puissances, la température de l'air réchauffé atteint des valeurs très importantes, de l'ordre de plusieurs centaines de degrés Celsius, si bien que la chaleur rayonnée par l'assemblage de canons à air risque d'endommager lesdits canons. Il est donc nécessaire de prévoir des moyens d'isolation conséquents qui protègent les canons à air. Enfin, le nombre parfois important de canons à air associés entre eux rend difficile les opérations de maintenance sur certains de ces derniers.

### OBJECTIF DE L'INVENTION

L'invention vise donc à proposer un ensemble de génération de chaleur limitant les pertes de charges et à la maintenance simplifiée.

L'invention vise également à proposer un ensemble de génération de chaleur optimisé pour le maintien de son intégrité structurelle face au rayonnement de chaleur qu'il génère.

L'invention vise également un procédé de pilotage de l'ensemble de génération de chaleur permettant de gérer les pics et creux de production du réseau de distribution d'énergie.

### EXPOSE DE L'INVENTION

À cet effet, l'invention vise un ensemble de génération de chaleur comprenant au moins un dispositif de génération de flux d'air, des moyens d'amenée d'air fluidiquement reliés au dispositif de génération de flux d'air, et au moins trois dispositifs de chauffage comprenant chacun une entrée d'air reliée aux moyens d'amenée d'air, et une sortie d'air réchauffé, caractérisé en ce que l'ensemble comprend des moyens de commande du dispositif de génération de flux d'air et des dispositifs de chauffage, en ce que les dispositifs de chauffage sont répartis le long d'au moins une ligne périmétrique, et en ce que chaque section de ligne périmétrique regroupant trois dispositifs de chauffage adjacents est curviligne.

L'ensemble peut également comporter les caractéristiques optionnelles suivantes considérées isolément ou selon toutes les combinaisons techniques possibles :
- Les moyens d'amenée d'air comprennent au moins un organe de distribution d'air formé d'un tube arqué dans lequel sont ménagés au moins une entrée d'air reliée en sortie du générateur de flux d'air et au moins trois sorties d'air, chacune étant reliée en entrée du dispositif de chauffage associé, et en ce que chaque portion de tube arqué regroupant trois sorties d'air adjacentes est en vis-à-vis de ladite section de ligne périmétrique regroupant les trois dispositifs adjacents.
- Les extrémités respectives du tube arqué sont fermées hermétiquement.
- Le tube arqué présente une unique entrée d'air, en ce que la section transversale dudit tube arqué diminue progressivement en s'éloignant de l'entrée d'air, et en ce que la vitesse du flux d'air est constante en tout point du tube arqué.
- L'entrée d'air est disposée au niveau du plan médian du tube arqué, et en ce que les deux portions du tube arqué s'étendant à partir de l'entrée d'air sont symétriques par rapport audit plan médian.
- Les dispositifs de chauffage sont régulièrement répartis selon au moins une couronne circulaire.
- Les dispositifs de chauffage sont répartis selon au moins deux couronnes circulaires concentriques.
- Les dispositifs de chauffage de deux couronnes successives sont disposés en quinconces.
- L'ensemble de génération de chaleur comprend au moins un tube arqué pour chaque couronne concentrique de dispositifs de chauffage.
- L'ensemble de génération de chaleur comprend un diffuseur d'air tronconique comportant une pluralité d'entrées d'air chacune reliée fluidiquement en sortie du dispositif de chauffage associé, et une sortie d'air réchauffé par les dispositifs de chauffage.
- Les moyens de commande sont configurés pour piloter les dispositifs de chauffage indépendamment les uns des autres.
- Les moyens de commande sont déportés et configurés pour communiquer avec les dispositifs de chauffage via des moyens de communication sans fil compris dans ledit ensemble.
- Chaque dispositif de chauffage est un réchauffeur électrique d'air forcé relié à une source d'énergie électrique.
- Chaque réchauffeur électrique comprend un organe de commande du type relai statique piloté par les moyens de commande.
- Chaque réchauffeur électrique comprend au moins une résistance chauffante réalisée en un alliage métallique du type fer-chrome-aluminium.
- L'ensemble de génération de chaleur comprend entre vingt et quarante dispositifs de chauffage, préférentiellement entre trente et trente-cinq dispositifs de chauffage.
- Chaque dispositif de chauffage est espacé d'un dispositif de chauffage adjacent d'une distance au moins égale à douze centimètres.
- Chaque dispositif de chauffage comprend des moyens d'isolation thermique.

L'invention vise également un procédé de pilotage d'un ensemble de génération de chaleur tel que décrit précédemment, comprenant les étapes successives mises en oeuvre par les moyens de commande de :
- i. Surveillance continue de la puissance délivrée par une source d'énergie à laquelle l'ensemble est relié ;
- ii. Détermination périodique du nombre maximal de dispositifs de chauffage susceptibles d'être alimentés de manière optimale par la source d'énergie en fonction de la puissance disponible ;
- iii. Détermination périodique du nombre de dispositifs de chauffage en fonctionnement dans l'ensemble ;
- iv. Ajustement en temps réel, en fonction de la puissance disponible, du nombre de dispositifs de chauffage en fonctionnement de sorte que le nombre de dispositifs de chauffage en fonctionnement soit au plus égal au nombre maximal de dispositifs de chauffage calculé à l'étape ii.

### PRESENTATION DES FIGURES

D'autres caractéristiques et avantages de l'invention ressortiront clairement de la description qui en est donnée ci-dessous, à titre indicatif et nullement limitatif, en référence aux figures annexées parmi lesquelles :
[Fig. 1] La figure 1 représente une vue de côté de l'ensemble de génération de chaleur selon l'invention ;
[Fig. 2] La figure 2 représente une vue schématique de face d'un agencement de dispositifs de chauffage selon un premier mode de réalisation de l'invention ;
[Fig. 3] La figure 3 représente une vue en perspective d'un organe de distribution d'air adapté aux dispositifs de chauffage agencés selon la figure 2 ;
[Fig. 4] La figure 4 représente une vue schématique de face d'un agencement de dispositifs de chauffage selon un second mode de réalisation de l'invention ;
[Fig. 5] La figure 5 représente une vue en perspective d'une partie de l'ensemble de génération de chaleur avec des dispositifs de chauffage agencés selon la figure 4 ;
[Fig. 6] La figure 6 représente un schéma synoptique des différentes étapes du procédé de contrôle de l'ensemble de la figure 1.

### DESCRIPTION DETAILLEE DE L'INVENTION

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement deux modes de réalisation de l'objet de l'invention mais qu'il peut exister d'autres modes de réalisation qui répondent à la définition de l'invention.

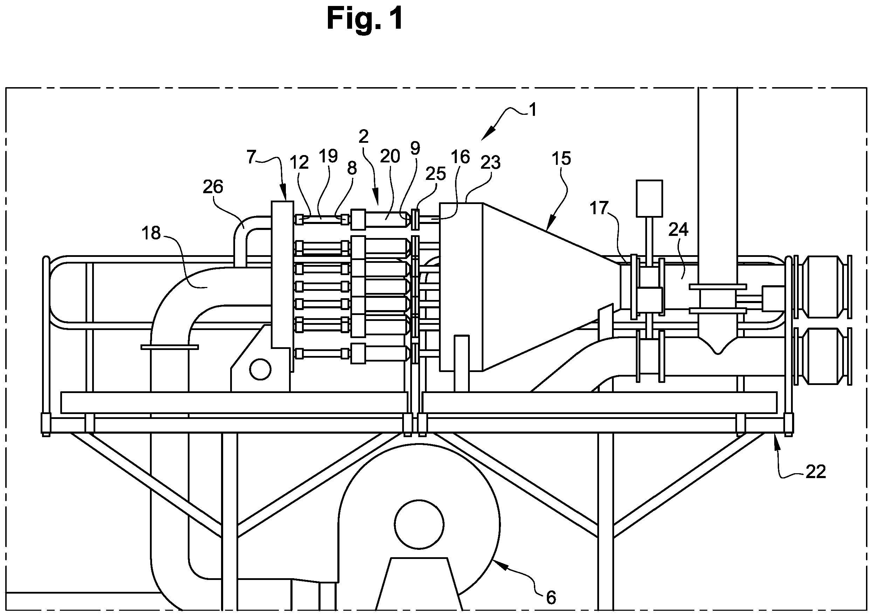

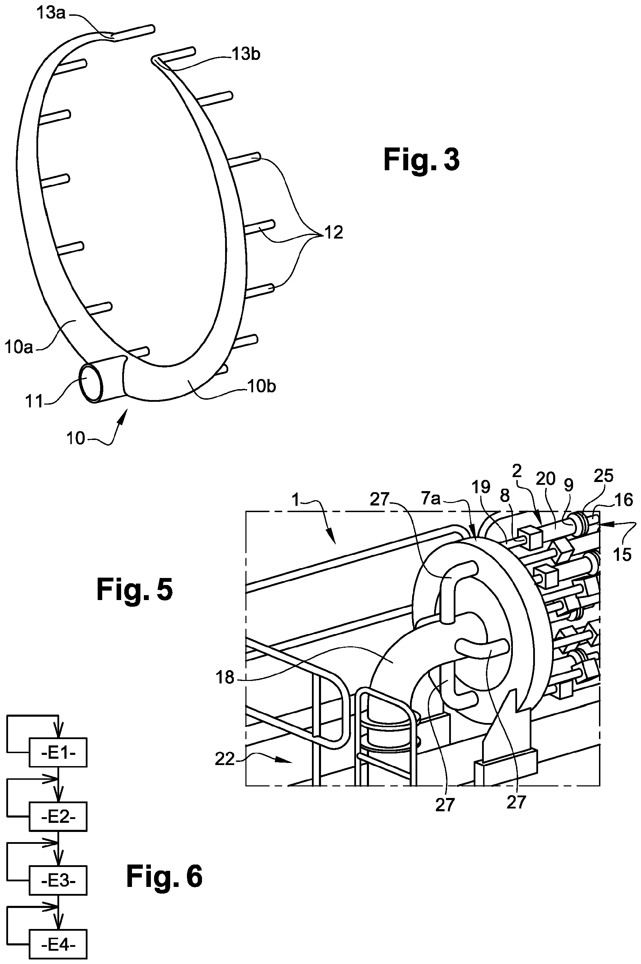

En référence aux figures 1 et 5, l'ensemble de génération de chaleur 1 est fixé sur un châssis 22 qui repose sur le sol, et comprend une pluralité de dispositifs de chauffage 2 connus sous la dénomination « réchauffeur d'air forcé » ou encore « canon à air chaud » ou simplement « canon à air ». C'est ce dernier terme qui sera utilisé dans la suite de la description.

Un canon à air 2 est un dispositif comprenant généralement un tube de ventilation 20 à profil cylindrique ou polygonal, à l'intérieur duquel des moyens de chauffage du flux d'air traversant le tube 20 sont agencés. En outre, de manière à générer un flux d'air à réchauffer traversant le tube de ventilation 20 de chaque canon à air 2, l'ensemble de génération de chaleur comprend un dispositif de génération de flux d'air 6, en particulier un dispositif de ventilation fluidiquement relié en entrée 8 de chaque canon à air 2 par l'intermédiaire d'un conduit principal 18, lui-même relié à des moyens d'amenée d'air 7, 7a comprenant au moins une entrée d'air fluidiquement connectée audit conduit principal 18, et une pluralité de sorties d'air 12 connectées aux entrées 8 des tubes de ventilation 20 des canons à air 2. Ces moyens d'amenée d'air 7, 7a seront décrits plus précisément ci-après.

Ainsi, lorsque le dispositif de génération de flux d'air 6, qu'on appellera dans la suite de la description « ventilateur », est activé, l'air ambiant pénètre par l'entrée 8 du tube de ventilation 20, est réchauffé à l'intérieur du tube 20 par les moyens de chauffage, puis l'air chaud ressort du tube de ventilation 20 par la sortie 9.

Les moyens de chauffage de chaque canon 2 peuvent être de différents types, et sont par exemple un dispositif de combustion à gaz ou à essence alimenté par un réservoir stockant le combustible considéré. De manière alternative et préférentielle, les moyens de chauffage du canon à air 2 comprennent une résistance électrique reliée à une source d'énergie électrique, typiquement le réseau de distribution d'énergie électrique. Le ventilateur 6 est également relié au réseau de distribution d'énergie électrique.

La résistance chauffante de chaque canon à air électrique 2 est alimentée en basse tension, par exemple une tension alternative de l'ordre de 400 volts en triphasé, et est adaptée pour fournir une puissance de l'ordre de 30 kilowatts et atteindre une température de l'ordre de 1400 degrés Celsius, tandis que le ventilateur 6 est apte à générer un flux d'air dont le débit peut atteindre 2 kilogrammes par seconde. Avec ces caractéristiques techniques, chaque canon à air 2 est ainsi en mesure de générer un flux d'air chaud susceptible d'atteindre une température de 900 degrés Celsius.

La résistance chauffante est réalisée dans un alliage métallique configuré pour résister à des températures supérieures à 1400 degrés Celsius. Un tel alliage est par exemple du type fer-chrome-aluminium, communément appelé « FeCrAl ».

Chaque canon à air 2 comprend un organe de commande pilotant l'arrêt ou la mise sous tension de la résistance électrique, cet organe étant préférentiellement un relai statique qui permet des commutations rapides de l'ordre de 100 millisecondes. En outre, de manière particulièrement avantageuse, ce relais est configuré pour s'actionner lorsque la tension alternative d'alimentation de la résistance chauffante est au voisinage de zéro volts dans le cycle alternatif. De cette manière, la génération d'harmoniques électriques autour de la fréquence fondamentale du réseau est évitée.

Selon l'invention, les canons à air 2 sont répartis le long d'au moins une ligne périmétrique 3a, 3b. En outre, chaque section de ligne périmétrique 3a, 3b qui regroupe trois canons à air adjacents 2 est curviligne. En d'autres termes, chaque section de ligne périmétrique qui regroupe trois canons à air adjacents 2 n'est pas rectiligne. Deux modes de réalisation de l'invention vont maintenant être décrits.

En référence aux figures 1 à 3, les canons à air 2 sont agencés en une unique couronne 3a. Par agencement en couronne, on entend toute répartition des canons à air 2 le long d'un périmètre de forme définie. La forme de ce périmètre est avantageusement circulaire, mais d'autres formes sont bien entendue applicables sans sortir du cadre de l'invention, notamment des formes elliptiques ou polygonales.

De la sorte, chaque canon à air 2 de l'ensemble subit le rayonnement thermique 4 uniquement des deux canons à air adjacents 2. Le rayonnement thermique 4 subit par chaque canon à air 2 de l'ensemble 1 est donc réduit par rapport à tout autre agencement matriciel de canons à air où certains canons à air sont susceptibles de subir le rayonnement thermique de huit canons adjacents.

Pour relier fluidiquement les canons à air 2 aux moyens d'amenée d'air 7, et en référence à la figure 3, ces moyens d'amenée d'air 7 comprennent un organe de distribution d'air formé d'un tube arqué 10 dont la forme est la même que la couronne 3a de répartition des canon à air 2. Ainsi, si la couronne 3a est circulaire, le tube arqué 10 est lui-même de forme générale circulaire. En outre, le tube arqué 10 est en vis-à-vis de la couronne 3a formant la ligne périmétrique de répartition des canons à air 2.

Le tube arqué 10 comprend une entrée d'air 11 connectée au conduit principal 18 par l'intermédiaire d'un conduit secondaire 26, et une pluralité de sorties d'air 12 chacune reliée en entrée 8 du tube de ventilation 20 du canon à air associé 2. Chaque sortie 12 est formée d'un tuyau rigide cylindrique s'étendant perpendiculairement au plan général du tube arqué 10, et l'ensemble des tuyaux rigides de sortie 12 présentent tous la même section.

Le tube arqué 10 ne forme pas un cercle complet, mais un cercle ouvert dont les extrémités libres 13a, 13b sont hermétiquement bouchées pour éviter que le flux d'air ne s'échappe ailleurs que par les tuyaux rigides de sortie 12 prévus à cet effet.

Pour assurer une vitesse constante du flux d'air à l'intérieur du tube arqué 10, sa section transversale diminue progressivement en s'éloignant de l'entrée d'air 11. La diminution progressive de la section du tube arqué 10 est ajustée pour que la vitesse du flux d'air en sortie du tube arqué 10 soit la même ou sensiblement la même au niveau de tous les tuyaux rigides de sortie 12. Ces tuyaux rigides de sortie 12 étant de sections identiques, tous les canons à air 2 sont alimentés par le même débit d'air à réchauffer. Cela assure un fonctionnement homogène de l'ensemble de génération de chaleur 1.

En outre, l'entrée d'air 11 étant préférentiellement disposée au niveau d'un plan médian du tube arqué 10, les deux portions 10a, 10b du tube arqué 10 s'étendant à partir de ladite entrée d'air 11 sont symétriques par rapport audit plan médian.

En référence à la figure 1, les tuyaux rigides de sortie 12 sont fluidiquement reliés aux entrées 8 des tubes de ventilation 20 des canons à air associés 2 par des tuyaux flexibles 19. La souplesse de ces tuyaux flexibles 19 permet de facilement déconnecter le canon à air 2 du tuyau rigide de sortie correspondant 12, et d'installer ou retirer aisément un ou plusieurs canons à air 2 de l'ensemble de génération de chaleur 1. En outre, puisque le flux d'air pénétrant dans les canons à air 2 est à température ambiante, il n'est pas nécessaire de prévoir des tuyaux flexibles 19 résistants à la chaleur. Des tuyaux flexibles 19 en plastique souple sont préférentiellement utilisés.

Toujours en référence à la figure 1, l'ensemble de génération de chaleur 1 comprend un dispositif collecteur 15 formé d'un diffuseur d'air tronconique. Ce diffuseur tronconique 15 comprend une pluralité d'entrée d'air chacune formée par une conduite rigide 16 s'étendant de la base 23 du diffuseur tronconique 15, et une sortie d'air 17 reliée à au moins un conduit de sortie d'air réchauffé 24. Chaque entrée d'air 16 du diffuseur 15 est fluidiquement connectée à la sortie 9 du tube de ventilation du canon à air considéré 2, par l'intermédiaire d'un moyen de fixation du type bride 25 pour faciliter le montage ou le démontage des canons à air 2.

En outre, les entrées d'air 16 du diffuseur 15 sont réparties le long d'une seconde ligne périmétrique de même forme que la couronne 3a de répartition des canons à air 2. En d'autres termes dans ce premier mode de réalisation, les deux lignes périmétriques de répartitions respectivement des canons à air 2 et des entrées d'air 16 du diffuseur 15 sont deux couronnes coaxiales de même diamètre.

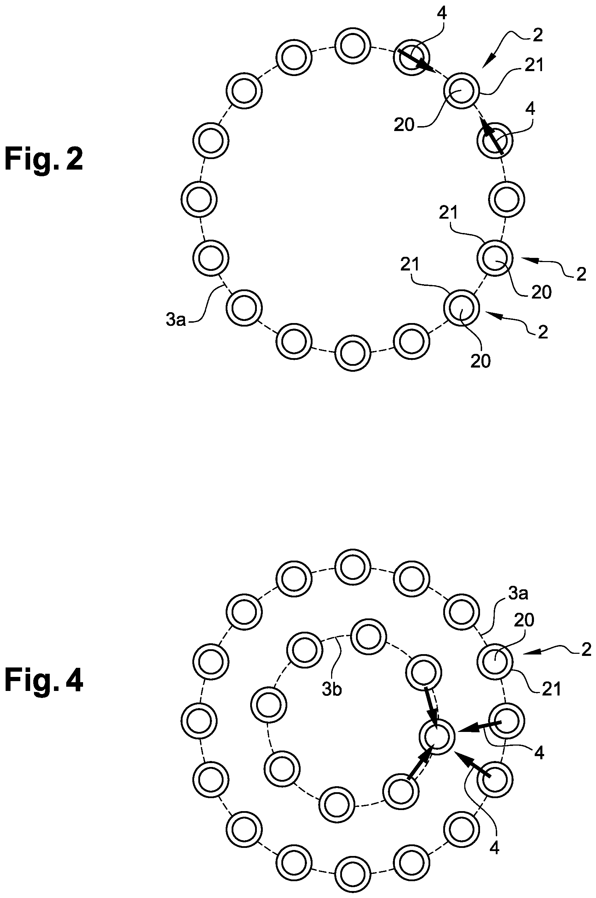

En référence aux figures 4 et 5, et selon un second mode préféré de réalisation de l'invention, les canons à air 2 sont agencés en double couronnes 3a, 3b. A l'instar du premier mode de réalisation, ces couronnes 3a, 3b sont avantageusement circulaires, mais d'autres formes sont bien entendue applicables sans sortir du cadre de l'invention, notamment des formes elliptiques ou polygonales.

Les canons à air 2 sont répartis selon deux couronnes concentriques 3a, 3b de diamètres différents : une couronne extérieure 3a et une couronne intérieure 3b. En outre, comme cela est représenté sur la figure 5, les canons à air 2 des deux couronnes 3a, 3b sont disposés en quinconce, de manière à augmenter la distance entre les canons à air 2 et donc de limiter le rayonnement infrarouge supporté par chaque canon à air 2.

De la sorte, chaque canon à air 2 de l'ensemble subit le rayonnement thermique 4 de quatre canons à air adjacents 2. Le rayonnement thermique 4 subit par chaque canon à air 2 de l'ensemble 1 est donc réduit par rapport à tout autre agencement 1a de canons à air matriciel.

Pour relier fluidiquement les canons à air 2 aux moyens d'amenée d'air 7a et en référence à la figure 5, ces derniers comprennent quatre organes de distribution d'air (non représentés) : deux pour la couronne extérieure 3a et deux pour la couronne intérieure 3b.

Chaque organe de distribution est formé d'un tube arqué destiné à alimenter en air une première moitié des canons 2 d'une même couronne 3a, 3b. Pour chaque couronne 3a, 3b, l'ensemble de génération de chaleur comprend donc deux tubes arqués en forme de demi-cercle dont les extrémités sont hermétiquement bouchées, chaque tube étant en vis-à-vis d'une section de la couronne considérée 3a, 3b de répartition des canons à air 2. En outre, les extrémités d'un tube arqué sont en vis-à-vis des extrémités d'un autre tube arqué d'une même couronne 3a, 3b.

A l'instar du tube arqué 10 du premier mode de réalisation de l'invention, chaque tube arqué dans ce second mode de réalisation comprend une entrée d'air disposée au niveau du plan médian dudit tube, cette entrée d'air étant connectée au conduit principal 18 par l'intermédiaire d'un conduit secondaire 27, et une pluralité de sorties d'air chacune reliée en entrée 8 du tube de ventilation 20 du canon à air associé 2. Chaque sortie est formée d'un tuyau rigide cylindrique s'étendant perpendiculairement au plan général du tube arqué, et l'ensemble des tuyaux rigides de sortie des tubes arqués présentent tous la même section.

Pour assurer une vitesse constante du flux d'air à l'intérieur des tubes arqués, la section transversale de chaque tube arqué diminue progressivement en s'éloignant de l'entrée d'air considérée. Ainsi, la vitesse du flux d'air en sortie des tubes arqués est la même au niveau de tous les tuyaux rigides de sortie des quatre tubes arqués. Tous les canons à air 2 sont donc alimentés par le même débit d'air à réchauffer, assurant un fonctionnement homogène de l'ensemble de génération de chaleur.

En référence à la figure 5, et à l'instar du premier mode de réalisation, les tuyaux rigides de sortie des tubes arqués selon le second mode de réalisation sont fluidiquement reliés aux entrées 8 des tubes de ventilations 20 des canons à air associés 2 par des tuyaux flexibles 19.

Dans ce second mode de réalisation, l'agencement des entrées d'air 16 du diffuseur tronconique 15 est adapté de sorte que les entrées d'air 16 soient en vis-à-vis des canons à air considérés 2. Ainsi, les entrées d'air 16 du diffuseur tronconique 15 sont réparties selon deux couronnes concentriques de mêmes diamètres que les couronnes 3a, 3b de répartition des canons à air 2.

Quel que soit le mode de réalisation de l'invention, les canons à air 2 de l'ensemble de génération de chaleur 1 selon l'invention sont mieux protégés du rayonnement thermique 4. La durée de vie des canons 2 est donc améliorée, et chaque canon 2 peut fonctionner au maximum de ses performances sans augmentation significative du risque de panne.

De manière avantageuse, pour encore diminuer et uniformiser le rayonnement thermique subit par chaque canon 2, les canons à air 2 sont uniformément espacés d'une distance comprise entre 10 et 20 cm, et préférentiellement de l'ordre de 12 cm. A noter qu'un agencement en couronne circulaire ou polygonale des canons à air 2 homogénéise encore davantage le rayonnement thermique subit par chaque canon 2.

Enfin, un agencement en couronne 3a ou en double couronnes 3a, 3b procure l'avantage de faciliter l'accès aux canons à air 2 par un utilisateur. Le montage ou le démontage de chaque canon à air 2 dans l'ensemble de génération de chaleur 1 est donc facilité, et les opérations de maintenance sont rendues plus simples, plus courtes et moins onéreuses.

Le montage en double couronne est même encore plus avantageux pour faciliter les opérations d'intervention, car il permet de réduire significativement la taille et l'encombrement de l'ensemble de génération de chaleur 1.

De manière avantageuse, pour protéger encore davantage les canons à air 2 du rayonnement thermique 4, ces derniers peuvent comprendre des moyens d'isolation thermique, par exemple une couche en matériau isolant thermique 21 enveloppant le tube de ventilation 20.

Selon un autre avantage de l'invention, dans la mesure où le rayonnement thermique 4 subit par les canons 2 est réduit, l'ensemble de génération de chaleur 1 est de forte puissance, supérieure ou égale à 600 kilowatts. L'ensemble 1 peut donc comprendre entre vingt et quarante canons à air 2, et préférentiellement entre trente et trente-cinq canons à air 2.

Enfin les canons à air 2, et notamment les relais statiques des canons à air 2, sont tous pilotés par des moyens de commande faisant partie de l'ensemble de génération de chaleur 1. Ces moyens de commande sont préférentiellement des moyens électroniques et/ou informatiques, comprenant notamment au moins un processeur et un espace mémoire pouvant stocker des instructions d'un programme d'ordinateur apte à être exécuté par le processeur.

Avantageusement, les relais statiques sont pilotables à distance et les moyens de commande sont déportés et configurés pour communiquer avec les relais statiques via des moyens de communication sans fil de l'ensemble de génération de chaleur 1. Ces moyens de communication sans fil peuvent être du type Bluetooth ou wifi, et sont préférentiellement des moyens de télécommunications utilisant un réseau de télécommunications sans fil connu, par exemple du type GSM. De la sorte, les canons à air 2 de l'ensemble de génération de chaleur 1 peuvent être pilotés à grande distance.

Avantageusement, les moyens de commande sont configurés pour piloter les canons à air 2 indépendamment les uns des autres. Les moyens de commande permettent donc de sélectionner précisément les canons à air 2 à activer.

En outre, les moyens de commande sont configurés pour collecter de manière continue, ou au moins périodique, des informations relatives au réseau de distribution d'électricité, notamment la puissance délivrée par le réseau de distribution d'énergie électrique à un instant donné.

Enfin, les moyens de commande sont également configurés pour piloter le ventilateur 6.

L'invention concerne également un procédé de pilotage des canons à air 2 d'un ensemble de génération de chaleur 1 en fonctionnement, lequel procédé est mis en oeuvre par les moyens de commande.

Dans une première étape E1, les moyens de commande surveillent et déterminent en continu la puissance délivrée par la source d'énergie à laquelle est relié l'ensemble de génération de chaleur 1, c'est-à-dire la puissance délivrée par le réseau de distribution d'électricité.

Au cours d'une deuxième étape E2, les moyens de commande déterminent de manière périodique le nombre maximal de canons à air 2 pouvant être alimentés de manière optimale en fonction la puissance disponible déterminée à la première étape E1.

Au cours de la troisième étape E3, les moyens de commande déterminent le nombre de canons à air 2 en fonctionnement dans l'ensemble de génération de chaleur 1.

Au cours de la quatrième et dernière étape E4, les moyens de commande déterminent périodiquement la différence entre le nombre de canons à air 2 en fonctionnement déterminé à la troisième étape et le nombre maximal de canons à air 2 pouvant être alimentés de manière optimale. Si la valeur de cette différence est différente de zéro, les moyens de commande ajustent le nombre de canons 2 en fonctionnement dans l'ensemble de génération de chaleur 1 de sorte que ce nombre de canons 2 soit au plus égal au nombre maximal de canons 2 pouvant fonctionner de manière optimale.

Ainsi, les moyens de commande sont configurés pour ajuster en temps réel le nombre de canons à air 2 en fonctionnement dans l'ensemble de génération de chaleur 1. De la sorte, l'ensemble de génération de chaleur 1 de l'invention est parfaitement adapté aux modulations de puissances délivrées par le réseau de distribution.

## Revendications

1. Ensemble de génération de chaleur (1) comprenant au moins un dispositif de génération de flux d'air (6), des moyens d'amenée d'air (7, 7a) fluidiquement reliés au dispositif de génération de flux d'air (6), au moins trois dispositifs de chauffage (2) comprenant chacun une entrée d'air (8) reliée aux moyens d'amenée d'air (7, 7a), et une sortie d'air réchauffé (9), des moyens de commande du dispositif de génération de flux d'air (6) et des dispositifs de chauffage (2), lesquels dispositifs de chauffage (2) sont répartis le long d'au moins une ligne périmétrique (3a, 3b), chaque section de ligne périmétrique (3a, 3b) regroupant trois dispositifs de chauffage adjacents (2) étant curviligne, **caractérisé en ce que** les moyens d'amenée d'air (7, 7a) comprennent au moins un organe de distribution d'air (10) formé d'un tube arqué dans lequel sont ménagés au moins une entrée d'air (11) reliée en sortie du générateur de flux d'air (6) et au moins trois sorties d'air (12), chacune étant reliée en entrée du dispositif de chauffage associé (2), et **en ce que** chaque portion de tube arqué (10) regroupant trois sorties d'air adjacentes (12) est en vis-à-vis de ladite section de ligne périmétrique (3a, 3b) regroupant les trois dispositifs adjacents (2).

2. Ensemble (1) selon la revendication précédente, **caractérisé en ce que** les extrémités respectives (13a, 13b) du tube arqué (10) sont fermées hermétiquement.

3. Ensemble (1) selon la revendication précédente, **caractérisé en ce que** le tube arqué (10) présente une unique entrée d'air (11), **en ce que** la section transversale dudit tube arqué (10) diminue progressivement en s'éloignant de l'entrée d'air (11), et **en ce que** la vitesse du flux d'air est constante en tout point du tube arqué (7, 7a).

4. Ensemble (1) selon la revendication précédente, **caractérisé en ce que** l'entrée d'air (11) est disposée au niveau du plan médian du tube arqué (10), et **en ce que** les deux portions (1 0a, 10b) du tubes arqué (10) s'étendant à partir de l'entrée d'air (11) sont symétriques par rapport audit plan médian.

5. Ensemble (1) selon l'une quelconque des revendications précédentes, **caractérisé en ce que** les dispositifs de chauffage (2) sont régulièrement répartis selon au moins une couronne circulaire (3a).

6. Ensemble (1) selon la revendication précédente, **caractérisé en ce que** les dispositifs de chauffage (2) sont répartis selon au moins deux couronnes circulaires concentriques (3a, 3b).

7. Ensemble (1) selon la revendication précédente, **caractérisé en ce que** les dispositifs de chauffage (2) de deux couronnes successives (3a, 3b) sont disposés en quinconces.

8. Ensemble (1) selon l'une quelconque des revendications 6 à 7, **caractérisé en ce qu'**il comprend au moins un tube arqué (10) pour chaque couronne concentrique (3a, 3b) de dispositifs de chauffage (2).

9. Ensemble (1) selon l'une quelconque des revendications précédentes, **caractérisé en ce qu'**il comprend un diffuseur d'air tronconique (15) comportant une pluralité d'entrées d'air (16) chacune reliée fluidiquement en sortie (9) du dispositif de chauffage associé (2), et une sortie d'air réchauffé (17) par les dispositifs de chauffage (2).

10. Ensemble (1) selon l'une quelconque des revendications précédentes, **caractérisé en ce que** les moyens de commande sont configurés pour piloter les dispositifs de chauffage (2) indépendamment les uns des autres.

11. Ensemble (1) selon la revendication précédente, **caractérisé en ce que** les moyens de commande sont déportés et configurés pour communiquer avec les dispositifs de chauffage (2) via des moyens de communication sans fil compris dans ledit ensemble (1).

12. Ensemble (1) selon l'une quelconque des revendications précédentes, **caractérisé en ce qu'**il comprend entre vingt et quarante dispositifs de chauffage (2), préférentiellement entre trente et trente-cinq dispositifs de chauffage (2).

13. Ensemble (1) selon l'une quelconque des revendications précédentes, **caractérisé en ce que** chaque dispositif de chauffage (2) est espacé d'un dispositif de chauffage adjacent (2) d'une distance au moins égale à douze centimètres.

14. Procédé de pilotage d'un ensemble de génération de chaleur (1) selon l'une quelconque des revendications précédentes, comprenant les étapes successives mises en oeuvre par les moyens de commande de :
i. Surveillance continue (E1) de la puissance délivrée par une source d'énergie à laquelle l'ensemble (1) est relié ;
ii. Détermination périodique (E2) du nombre maximal de dispositifs de chauffage (2) susceptibles d'être alimentés de manière optimale par la source d'énergie en fonction de la puissance disponible ;
iii. Détermination périodique (E3) du nombre de dispositifs de chauffage (2) en fonctionnement dans l'ensemble (1) ;
iv. Ajustement en temps réel (E4), en fonction de la puissance disponible, du nombre de dispositifs de chauffage (2) en fonctionnement de sorte que le nombre de dispositifs de chauffage (2) en fonctionnement soit au plus égal au nombre maximal de dispositifs de chauffage (2) calculé à l'étape ii.

## Patentansprüche

1. Anordnung zur Wärmeerzeugung (1), umfassend mindestens eine Luftstromerzeugungsvorrichtung (6), Luftzuführungsmittel (7, 7a), die fluidisch mit der Luftstromerzeugungsvorrichtung (6) verbunden sind, mindestens drei Heizvorrichtungen (2), umfassend jeweils einen Lufteinlass (8), der mit den Luftzuführungsmitteln (7, 7a) verbunden ist, und einen Auslass für erhitzte Luft (9), Mittel zur Steuerung der Luftstromerzeugungsvorrichtung (6) und der Heizvorrichtungen (2), wobei die Heizvorrichtungen (2) entlang mindestens einer Umfangslinie (3a, 3b) verteilt sind, wobei jedes Umfangsliniensegment (3a, 3b), das drei benachbarte Heizvorrichtungen (2) beinhaltet, krummlinig ist, **dadurch gekennzeichnet, dass** die Luftzuführungsmittel (7, 7a) mindestens ein Luftverteilungsorgan (10) umfassen, das aus einem gebogenen Rohr gebildet wird, in dem mindestens ein Lufteinlass (11), der mit dem Auslass des Luftstromerzeugers (6) verbunden ist, und mindestens drei Luftauslässe (12), von denen jeder mit dem Einlass der zugeordneten Heizvorrichtung (2) verbunden ist, ausgebildet sind, und dadurch, dass jeder Abschnitt des gebogenen Rohrs (10), der drei benachbarte Luftauslässe (12) beinhaltet, dem Umfangsliniensegment (3a, 3b), das die drei benachbarten Vorrichtungen (2) beinhaltet, gegenüberliegt.

2. Anordnung (1) nach dem vorhergehenden Anspruch, **dadurch gekennzeichnet, dass** die jeweiligen Enden (13a, 13b) des gebogenen Rohrs (10) hermetisch verschlossen sind.

3. Anordnung (1) nach dem vorhergehenden Anspruch, **dadurch gekennzeichnet, dass** das gebogene Rohr (10) einen einzigen Lufteinlass (11) aufweist, dass der Querschnitt des gebogenen Rohrs (10) vom Lufteinlass (11) weg zunehmend abnimmt und dass die Geschwindigkeit des Luftstroms an jedem Punkt des gebogenen Rohrs (7, 7a) konstant ist.

4. Anordnung (1) nach dem vorhergehenden Anspruch, **dadurch gekennzeichnet, dass** der Lufteinlass (11) an der Mittelebene des gebogenen Rohrs (10) angeordnet ist und dass die beiden Abschnitte (10a, 10b) des gebogenen Rohrs (10), die sich von dem Lufteinass (11) aus erstrecken, zu der Mittelebene symmetrisch sind.

5. Anordnung (1) nach einem der vorhergehenden Ansprüche, **dadurch gekennzeichnet, dass** die Heizvorrichtungen (2) gemäß mindestens eines kreisförmigen Kranzes (3a) regelmäßig verteilt sind.

6. Anordnung (1) nach dem vorhergehenden Anspruch, **dadurch gekennzeichnet, dass** die Heizvorrichtungen (2) gemäß mindestens zwei konzentrischen kreisförmigen Kränzen (3a, 3b) verteilt sind.

7. Anordnung (1) nach dem vorhergehenden Anspruch, **dadurch gekennzeichnet, dass** die Heizvorrichtungen (2) von zwei aufeinander folgenden Kränzen (3a, 3b) versetzt angeordnet sind.

8. Anordnung (1) nach einem der Ansprüche 6 bis 7, **dadurch gekennzeichnet, dass** sie mindestens ein gebogenes Rohr (10) für jeden konzentrischen Kranz (3a, 3b) aus Heizvorrichtungen (2) umfasst.

9. Anordnung (1) nach einem der vorhergehenden Ansprüche, **dadurch gekennzeichnet, dass** sie einen kegelstumpfförmigen Luftdiffusor (15) umfasst, der eine Mehrzahl von Lufteinlässen (16), von denen jeder fluidisch mit dem Auslass (9) der zugeordneten Heizvorrichtung (2) verbunden ist, und einen Auslass für von den Heizvorrichtungen (2) erhitzte Luft (17) aufweist.

10. Anordnung (1) nach einem der vorhergehenden Ansprüche, **dadurch gekennzeichnet, dass** die Steuerungsmittel dazu ausgestaltet sind, die Heizvorrichtungen (2) unabhängig voneinander anzusteuern.

11. Anordnung (1) nach dem vorhergehenden Anspruch, **dadurch gekennzeichnet, dass** die Steuerungsmittel abgesetzt sind und dazu ausgestaltet sind, mit den Heizvorrichtungen (2) über drahtlose Kommunikationsmittel zu kommunizieren, die in der Anordnung (1) inbegriffen sind.

12. Anordnung (1) nach einem der vorhergehenden Ansprüche, **dadurch gekennzeichnet, dass** sie zwischen zwanzig und vierzig Heizvorrichtungen (2), bevorzugt zwischen dreißig und fünfunddreißig Heizvorrichtungen (2) umfasst.

13. Anordnung (1) nach einem der vorhergehenden Ansprüche, **dadurch gekennzeichnet, dass** jede Heizvorrichtung (2) von einer benachbarten Heizvorrichtung (2) um mindestens zwölf Zentimeter entfernt ist.

14. Verfahren zur Ansteuerung einer Anordnung zur Wärmeerzeugung (1) nach einem der vorhergehenden Ansprüche, umfassend die von den Steuermitteln ausgeführten aufeinander folgenden Schritte:
i. Kontinuierliches Überwachen (E1) der von einer Energiequelle, mit der die Anordnung (1) verbunden ist, abgegebenen Leistung;
ii. Periodisches Bestimmen (E2) der maximalen Anzahl von Heizvorrichtungen (2), die von der Energiequelle in Abhängigkeit von der verfügbaren Leistung optimal versorgt werden können;
iii. Periodisches Bestimmen (E3) der Anzahl von Heizvorrichtungen (2), die in der Anordnung (1) in Betrieb sind;
iv. Anpassen in Echtzeit (E4), in Abhängigkeit von der verfügbaren Leistung, der Anzahl der in Betrieb befindlichen Heizvorrichtungen (2), so dass die Anzahl von in Betrieb befindlichen Heizvorrichtungen (2) höchstens gleich der im Schritt ii berechneten maximalen Anzahl von Heizvorrichtungen (2) ist.

## Claims

1. Heat generation assembly (1) comprising at least one air flow generation device (6), air supply means (7, 7a) fluidically connected to the air flow generation device (6), at least three heating devices (2) each comprising an air inlet (8) connected to the air supply means (7, 7a), and a heated-air outlet (9), means for controlling the air flow generation device (6) and the heating devices (2), which heating devices (2) are distributed along at least one peripheral line (3a, 3b), each section of peripheral line (3a, 3b) that groups together three adjacent heating devices (2) being curved, wherein the air supply means (7, 7a) comprise at least one air distribution member (10) formed by an arched tube in which are formed at least one air inlet (11) connected at the outlet of the air flow generator (6) and at least three air outlets (12), each being connected at the inlet of the associated heating device (2), and wherein each arched tube portion (10) that groups together three adjacent air outlets (12) faces said section of peripheral line (3a, 3b) that groups together the three adjacent devices (2).

2. Assembly (1) according to the preceding claim, wherein the respective ends (13a, 13b) of the arched tube (10) are hermetically sealed.

3. Assembly (1) according to the preceding claim, wherein the arched tube (10) has a single air inlet (11), wherein the cross section of said arched tube (10) gradually decreases in the direction away from the air inlet (11), and wherein the speed of the air flow is constant at all points of the arched tube (7, 7a).

4. Assembly (1) according to the preceding claim, wherein the air inlet (11) is disposed in the median plane of the arched tube (10), and wherein the two portions (10a, 10b) of the arched tube (10) extending from the air inlet (11) are symmetrical with respect to said median plane.

5. Assembly (1) according to any one of the preceding claims, wherein the heating devices (2) are evenly distributed along at least one circular ring (3a).

6. Assembly (1) according to the preceding claim, wherein the heating devices (2) are distributed along at least two concentric circular rings (3a, 3b).

7. Assembly (1) according to the preceding claim, wherein the heating devices (2) of two successive rings (3a, 3b) are disposed in a staggered manner.

8. Assembly (1) according to either one of Claims 6 and 7, wherein it comprises at least one arched tube (10) for each concentric ring (3a, 3b) of heating devices (2).

9. Assembly (1) according to any one of the preceding claims, wherein it comprises a frustoconical air diffuser (15) having a plurality of air inlets (16), each fluidly connected at the outlet (9) of the associated heating device (2), and an outlet (17) for air heated by the heating devices (2).

10. Assembly (1) according to any one of the preceding claims, wherein the control means are configured to control the heating devices (2) independently of one another.

11. Assembly (1) according to the preceding claim, wherein the control means are remote and configured to communicate with the heating devices (2) via wireless communication means included in said assembly (1).

12. Assembly (1) according to any one of the preceding claims, wherein it comprises between twenty and forty heating devices (2), preferably between thirty and thirty-five heating devices (2).

13. Assembly (1) according to any one of the preceding claims, wherein each heating device (2) is spaced apart from an adjacent heating device (2) by a distance of at least twelve centimetres.

14. Method for controlling a heat generation assembly (1) according to any one of the preceding claims, comprising the following successive steps implemented by the control means:
i. Continuously monitoring (E1) the power delivered by an energy source to which the assembly (1) is connected;
ii. Periodically determining (E2) the maximum number of heating devices (2) able to be supplied in the optimum case by the energy source as a function of the available power;
iii. Periodically determining (E3) the number of operational heating devices (2) in the assembly (1) ;
iv. Regulating in real time (E4), as a function of the available power, the number of operational heating devices (2) such that the number of operational heating devices (2) is at most equal to the maximum number of heating devices (2) calculated in step ii.
